# EUROPÄISCHE PATENTANMELDUNG

(11) **EP 4 654 349 A1**
(43) Veröffentlichungstag der Anmeldung: **26.11.2025**
(21) Anmeldenummer: 24177601.2
(22) Anmeldetag: 23.05.2024
(51) Int. Cl.: H01M 50/204, H01M 50/207, H01M 50/224, H01M 50/233, H01M 50/236, H01M 50/242, H01M 50/249, H01M 50/262, B60K 1/04, B60L 50/64

(54) **BATTERIEEINHAUSUNG**

(71) Anmelder: Benteler Automobiltechnik GmbH, 33102 Paderborn (DE)
(72) Erfinder: BLOEMEKE, Guido, 33102 Paderborn (DE); HANDING, Christian, 33449 Langenberg (DE); MICHEL, Kai, 33154 Salzkotten (DE); SCHMITZ, Stefan, 33739 Bielefeld (DE)
(74) Vertreter: Patentship Patentanwaltsgesellschaft mbH

(57) **Zusammenfassung**

Die vorliegende Offenbarung betrifft eine Batterieeinhausung (100) für die Aufnahme einer Mehrzahl von Batteriezellen oder Batteriemodulen, insbesondere in einem elektrisch antreibbaren Fahrzeug, mit einer einstückigen und geformten Aufnahmewanne (101) zum Aufnehmen der Mehrzahl der Batteriezellen oder Batteriemodule, wobei die Aufnahmewanne (101) eine Bodenplatte (103) und eine Außenwand (105) aufweist, welche die Bodenplatte (103) umlaufend angeordnet ist, wobei die Außenwand (105) einen Wanneninnenraum (107) der Aufnahmewanne (101) begrenzt, wobei an der Außenwand (105) der Aufnahmewanne (101) ein die Außenwand (105) umlaufender Flansch (109) angeordnet ist, welcher sich winklig zu der Außenwand (105) der Aufnahmewanne (101) erstreckt; einer Mehrzahl von Crashrahmenprofilen (111), welche an wenigstens zwei Seitenwandabschnitten (106) der Außenwand (105) der Aufnahmewanne (101) angeordnet sind, und welche ausgebildet sind, auf die Aufnahmewanne (101) wirkende Kräfte durch eine Verformung aufzunehmen, wobei die Crashrahmenprofile (111) eine Mehrzahl von Koppelabschnitten (113) zur Befestigung der Batterieeinhausung (100) an Karosserielängsträgern, insbesondere Fahrzeugschwellern aufweisen; und einer Mehrzahl von Querträgern (115), welche jeweils mit zwei Crashrahmenprofilen (111) der Mehrzahl von Crashrahmenprofilen (111) verbunden sind, wobei die Querträger (115) zumindest abschnittsweise als Profilkörper ausgebildet sind, welche mit dem jeweiligen Crashrahmenprofil (111) verbunden sind, und wobei die Querträger (115) in den Querträgerendbereichen (125) eine gegenüber dem Querträgermittenbereich (123) größere Zugfestigkeit oder Steifigkeit aufweisen.

## Beschreibung

Die vorliegende Offenbarung betrifft eine Batterieeinhausung für die Aufnahme einer Mehrzahl von Batteriezellen oder Batteriemodulen, insbesondere in einem elektrisch antreibbaren Fahrzeug.

Batterieeinhausungen werden in einer Vielzahl von technischen Anwendungen verwendet, um Batterien, insbesondere Batteriezellen und/oder Batteriemodule, aufzunehmen und vor äußeren Umwelteinflüssen zu schützen, beispielsweise zur Bereitstellung von elektrischer Energie in elektrisch angetriebenen Fahrzeugen.

Aufgrund der Gefahr von Fahrzeugbränden bei beschädigten Batteriezellen, müssen die entsprechenden Batteriezellen und/oder Batteriemodule in stabilen Aufnahmewannen aufgenommen werden, welche selbst bei einer Kollision des Fahrzeugs einen ausreichenden Schutz der Batteriezellen und/oder Batteriemodule ermöglichen. Hierbei weisen entsprechende stabile Aufnahmewannen oftmals Deformationselemente auf, welche bei einer Kollision des Fahrzeugs auftretende Kräfte durch eine Deformation wirksam aufnehmen und dadurch die in den Aufnahmewannen angeordneten Batteriezellen vor Beschädigung schützen.

Herkömmlich verwendete Deformationselemente weisen jedoch oftmals den Nachteil auf, dass bei entsprechend hohen Kollisionsgeschwindigkeiten und/oder bei einem Seitenaufprall die in den Aufnahmewannen aufgenommenen Batteriezellen nicht ausreichend geschützt sind, so dass ein Bedarf besteht, die strukturelle Stabilität von Aufnahmewannen zur Aufnahme von Batteriezellen und/oder von Batteriemodulen zu verbessern.

In der Druckschrift US 11 813 935 B2 ist eine aus Metall geformte Wanne zur Aufnahme von Batterien offenbart.

Es ist die Aufgabe der vorliegenden Offenbarung, eine Batterieeinhausung bereitzustellen, welche einfach zu fertigen ist, und welche eine hohe strukturelle Stabilität zum Schutz der aufgenommenen Batteriezellen und/oder Batteriemodulen aufweist.

Diese Aufgabe wird durch die Merkmale des unabhängigen Anspruchs gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass durch die Anbindung einer Mehrzahl von Querträgern an Crashrahmenprofilen, welche an Seitenwandabschnitten der Außenwand der Aufnahmewanne angeordnet sind, die strukturelle Stabilität der Batterieeinhausung im Kollisionsfall, insbesondere bei einem Seitenaufprall, deutlich erhöht werden kann.

Die vorliegende Offenbarung basiert auf der weiteren Erkenntnis, dass durch die Erhöhung der Zugfestigkeit oder Steifigkeit in den Querträgerendbereichen des jeweiligen Querträgers gegenüber dem Querträgermittenbereich des jeweiligen Querträgers eine besonders wirksame Aufnahme von Kräften über die Querträgerendbereiche ermöglicht wird, und die aufgenommenen Kräfte von den Querträgerendbereichen vorteilhaft in den Querträgermittenbereich des jeweiligen Querträgers eingeleitet werden können.

Gemäß einem ersten Aspekt betrifft die Offenbarung eine Batterieeinhausung für die Aufnahme einer Mehrzahl von Batteriezellen oder Batteriemodulen, insbesondere in einem elektrisch antreibbaren Fahrzeug, mit einer einstückigen und geformten Aufnahmewanne zum Aufnehmen der Mehrzahl der Batteriezellen oder Batteriemodule, wobei die Aufnahmewanne eine Bodenplatte und eine Außenwand aufweist, welche die Bodenplatte umlaufend angeordnet ist, wobei die Außenwand einen Wanneninnenraum der Aufnahmewanne begrenzt, wobei an der Außenwand der Aufnahmewanne ein die Außenwand umlaufender Flansch angeordnet ist, welcher sich winklig zu der Außenwand der Aufnahmewanne erstreckt; einer Mehrzahl von Crashrahmenprofilen, welche an wenigstens zwei Seitenwandabschnitten der Außenwand der Aufnahmewanne angeordnet sind, und welche ausgebildet sind, auf die Aufnahmewanne wirkende Kräfte durch eine Verformung aufzunehmen, wobei die Crashrahmenprofile eine Mehrzahl von Koppelabschnitten zur Befestigung der Batterieeinhausung an Karosserielängsträgern, insbesondere Fahrzeugschwellern aufweisen; und einer Mehrzahl von Querträgern, welche jeweils mit zwei Crashrahmenprofilen der Mehrzahl von Crashrahmenprofilen verbunden sind, wobei die Querträger zumindest abschnittsweise als Profilkörper ausgebildet sind, welche mit dem jeweiligen Crashrahmenprofil verbunden sind, und wobei die Querträger in den Querträgerendbereichen eine gegenüber dem Querträgermittenbereich größere Zugfestigkeit oder Steifigkeit aufweisen.

Dadurch wird der technische Vorteil erreicht, dass durch die Verwendung von mindestens zwei Crashrahmenprofilen, welche an wenigstens zwei Seitenwandabschnitten der Außenwand angeordnet sind, und dass durch die Anbindung von Querträgern an die Crashrahmenprofile ein wirksamer Kollisionsschutz insbesondere bei einem Seitenaufprall ermöglicht wird.

Dies wird dadurch erreicht, dass bei einer Krafteinwirkung auf eines der Crashrahmenprofile zumindest ein Teil der wirkenden Kräfte über den mit dem Crashrahmenprofil verbundenen Querträger abgeleitet wird.

Hierbei ist der jeweilige Querträger zumindest abschnittsweise als ein Profilkörper ausgebildet, welcher mit dem jeweiligen Crashrahmenprofil verbunden ist.

Insbesondere ist der jeweilige Querträger zumindest abschnittsweise als ein zumindest einseitig offener Profilkörper ausgebildet, und/oder ist insbesondere der jeweilige Querträger zumindest abschnittsweise als ein geschlossener Profilkörper ausgebildet.

Insbesondere ist der jeweilige Querträger vollständig als ein Profilkörper ausgebildet.

Insbesondere ist der jeweilige Querträger vollständig als ein zumindest einseitig offener Profilkörper ausgebildet oder ist der jeweilige Querträger vollständig als ein geschlossener Profilkörper ausgebildet.

Insbesondere ist der jeweilige Querträger abschnittsweise als ein zumindest einseitig offener Profilkörper ausgebildet und ist der jeweilige Querträger abschnittsweise als ein geschlossener Profilkörper ausgebildet.

Insbesondere ist jeweils ein Querträgerendbereich die beiden Querträgerendbereiche des jeweiligen Querträgers mit jeweils einem der beiden Crashrahmenprofile der Mehrzahl von Crashrahmenprofilen verbunden.

Insbesondere sind die beiden Querträgerendbereiche des jeweiligen Querträgers jeweils als ein Profilkörper ausgebildet, welcher mit dem jeweiligen Crashrahmenprofil verbunden ist. Insbesondere sind die beiden Querträgerendbereiche des jeweiligen Querträgers jeweils als ein zumindest einseitig offener Profilkörper oder als ein geschlossener Profilkörper ausgebildet, welcher mit dem jeweiligen Crashrahmenprofil verbunden ist.

Insbesondere weisen die als zumindest einseitig offene Profilkörper ausgebildeten Querträger eine offene Querträgerunterseite auf, wobei insbesondere die offene Querträgerunterseite, insbesondere an den jeweiligen Querträgerenden der Querträger, mit den jeweiligen Crashrahmenprofilen verbunden ist.

Insbesondere verbindet der jeweilige Querträgermittenbereich die beiden Querträgerendbereiche des jeweiligen Querträgers.

Dadurch, dass die Querträger in den Querträgerendbereichen eine gegenüber dem Querträgermittenbereich größere Zugfestigkeit oder Steifigkeit aufweisen werden die auf das jeweilige Crashrahmenprofil bei einem Aufprall wirkenden Kräfte durch die Querträgerendbereiche großflächig aufgenommen und in den Querträgermittenbereich des Querträgers eingeleitet, so dass größere Kräfte bei einer Kollision aufgenommen werden können.

Durch die größere Zugfestigkeit oder Steifigkeit der Querträgerendbereiche können in den übrigen Bereichen, wie beispielsweise dem Querträgermittenbereich, die Querträger mit einer geringeren Dimensionierung ausgebildet werden, was das Gewicht der Querträger reduziert, was insbesondere bei Elektrofahrzeugen eine relevante Größe ist. Zudem wird die Hauptfügestelle zwischen dem Querträger und dem jeweiligen Crashrahmenprofil vergrößert, so dass eine vergrößerte Anzahl an Anbindungspunkten vorliegt, was wiederum die Stabilität der Verbindung zwischen dem jeweiligen Querträger und den Crashrahmenprofilen erhöht.

Insbesondere sind die Querträger nebeneinander, insbesondere parallel zueinander, angeordnet.

Insbesondere umfasst die Mehrzahl von Crashrahmenprofilen zwei Crashrahmenprofile, welche an zwei Seitenwandabschnitten der Außenwand der Aufnahmewanne, insbesondere an zwei gegenüberliegenden Seitenwandabschnitten der Außenwand der Aufnahmewanne, angeordnet sind, wobei die Mehrzahl von Querträgern mit beiden Crashrahmenprofilen verbunden ist.

Alternativ umfasst die Mehrzahl von Crashrahmenprofilen vier Crashrahmenprofile, welche an allen vier Seitenwandabschnitten der Außenwand der Aufnahmewanne angeordnet sind, wobei die Mehrzahl von Querträgern mit zwei der vier Crashrahmenprofile verbunden ist, welche an zwei gegenüberliegenden Seitenwandabschnitten der Außenwand der Aufnahmewanne angeordnet sind.

Ferner wird betont, dass gemäß dem ersten Aspekt die Crashrahmenprofile eine Mehrzahl von Koppelabschnitten zur Befestigung der Batterieeinhausung an Karosserielängsträgern, insbesondere Fahrzeugschwellern aufweisen. Dies bedeutet, dass die Crashrahmenprofile der Batterieeinhausung und die Karosserielängsträger, insbesondere Fahrzeugschweller, des Fahrzeugs unterschiedliche Bauteile sind.

In einer Ausführungsform ist die Steifigkeit des jeweiligen Querträgerendbereichs erhöht, durch jeweils eine sich entlang der jeweiligen Querträgererstreckungsachse erstreckende Verstärkungsrippe, wobei die jeweilige Verstärkungsrippe sich im jeweiligen Querträgerendbereich in eine Mehrzahl von Verstärkungsrippenverzweigungen aufspreizt.

Dadurch wird der technische Vorteil erreicht, dass die auf das jeweilige Crashrahmenprofil bei einem Aufprall wirkenden Kräfte durch die Verstärkungsrippenverzweigungen großflächig aufgenommen und vereinigt, bzw. gebündelt in die Verstärkungsrippe des Querträgers eingeleitet werden, so dass größere Kräfte bei der Kollision aufgenommen werden können.

Insbesondere ist die jeweilige Verstärkungsrippe in dem jeweiligen Querträgermittenbereich des jeweiligen Querträgers angeordnet und sind die Verstärkungsrippenverzweigungen im jeweiligen Querträgerendbereich des jeweiligen Querträgers angeordnet.

In einer Ausführungsform weisen die Koppelabschnitte der Crashrahmenprofile jeweils zumindest eine Durchführung auf, durch welche ein Befestigungselement, insbesondere Befestigungsschraube, führbar ist, um die Batterieeinhausung an den Karosserielängsträgern, insbesondere Fahrzeugschwellern zu befestigen.

Dadurch wird der technische Vorteil erreicht, dass eine wirksame Anbindung der Batterieeinhausung an den Karosserielängsträgern, insbesondere Fahrzeugschwellern ermöglicht wird.

Insbesondere ist das Befestigungselement, insbesondere Befestigungsschraube, durch eine weitere Durchführung der Karosserielängsträger, insbesondere Fahrzeugschweller, und durch die Durchführung der Koppelabschnitte der Crashrahmenprofile führbar, um die Crashrahmenprofile an den Karosserielängsträgern, insbesondere Fahrzeugschwellern, zu befestigen. Insbesondere ist eine Befestigungsmutter auf das Befestigungselement, insbesondere Befestigungsschraube, aufschraubbar.

In einer Ausführungsform ist die Mehrzahl von Querträgern an einer dem Wanneninnenraum abgewandten Bodenplattenunterseite der Bodenplatte angeordnet.

Dadurch wird der technische Vorteil erreicht, dass eine wirksame unterseitige Stabilisierung der Aufnahmewanne erreicht wird. Insbesondere sind die Querträger mit der Bodenplattenunterseite der Bodenplatte verbunden.

In einer Ausführungsform begrenzt das jeweilige Crashrahmenprofil mit dem jeweiligen Seitenwandabschnitt der Außenwand jeweils zumindest eine sich entlang des jeweiligen Seitenwandabschnitts erstreckende Hohlkammer, oder ist das jeweilige Crashrahmenprofil ein Hohlkammerprofil.

Dadurch wird der technische Vorteil erreicht, dass eine entsprechende Hohlkammer in dem Crashrahmenprofil, bzw. die Ausbildung des Crashrahmenprofils als ein Hohlkammerprofil eine Verformung der Außenwand des Crashrahmenprofils nach innen und damit eine Aufnahme von wirkenden Kräften zulässt.

In einer Ausführungsform weisen die Querträger jeweils den Querträgermittenabschnitt und jeweils zwei mit dem Querträgermittenabschnitt einstückig ausgebildete Querträgerendabschnitte auf, wobei die Querträgerendabschnitte jeweils als Profilkörper ausgebildet sind, welche mit dem jeweiligen Crashrahmenprofil verbunden sind, und wobei die Mehrzahl von Verstärkungsrippenverzweigungen der jeweiligen Verstärkungsrippe in dem jeweiligen Querträgerendabschnitt geformt ist.

Insbesondere ist die sich entlang der jeweiligen Querträgererstreckungsachse erstreckende Verstärkungsrippe in dem Querträgermittenabschnitt angeordnet.

Dadurch wird der technische Vorteil erreicht, dass durch die endseitige Ausbildung der Querträger als Profilkörper eine wirksame Anbindung an das jeweilige Crashrahmenprofil ermöglicht wird. Durch das Einbringen der Verstärkungsrippenverzweigungen in dem jeweiligen Querträgerendabschnitt, welcher mit dem Crashrahmenprofil verbunden ist, wird erreicht, dass eine wirksame Krafteinleitung über die Verstärkungsrippenverzweigungen in die Verstärkungsrippe des Querträgermittenabschnitts sichergestellt ist.

In einer Ausführungsform weisen die Querträgerendabschnitte neben den Verstärkungsrippenverzweigungen unverformte Abschnitte auf, welche jeweils mit dem jeweiligen Crashrahmenprofil verbunden sind.

Dadurch wird der technische Vorteil erreicht, dass durch die unverformten Abschnitte eine große Anbindungsfläche zwischen den Querträgerendabschnitten und dem jeweiligen Crashrahmenprofil ermöglicht wird, was die strukturelle Stabilität der Anbindung des Querträgers an das jeweilige Crashrahmenprofil erhöht.

In einer Ausführungsform erstreckt sich die sich entlang der jeweiligen Querträgererstreckungsachse erstreckende Verstärkungsrippe des jeweiligen Querträgers über die gesamte Länge des Querträgermittenabschnitts.

Insbesondere ist die Verstärkungsrippe an beiden Enden mit jeweils einer Mehrzahl von Verstärkungsrippenverzweigungen verbunden.

Dadurch wird der technische Vorteil erreicht, dass über die Verstärkungsrippenverzweigungen eine wirksame Krafteinleitung in die Verstärkungsrippe des Querträgermittenabschnitts erreicht wird.

In einer Ausführungsform ist der jeweilige Querträgerendabschnitt des jeweiligen Querträgers mit dem jeweiligen Crashrahmenprofil stoffschlüssig, formschlüssig und/oder kraftschlüssig verbunden.

Dadurch wird der technische Vorteil erreicht, dass eine strukturell besonders stabile Verbindung zwischen dem jeweiligen Querträger und dem jeweiligen Crashrahmenprofil erreicht wird.

In einer Ausführungsform sind die Querträger mit der Bodenplattenunterseite der Bodenplatte stoffschlüssig, formschlüssig und/oder kraftschlüssig verbunden, wobei insbesondere der Querträgermittenabschnitt des jeweiligen Querträgers mit der Bodenplattenunterseite der Bodenplatte stoffschlüssig, formschlüssig und/oder kraftschlüssig verbunden ist, insbesondere durch Punktschweißkleben oder Laserschweißen.

Dadurch wird der technische Vorteil erreicht, dass eine besonders stabile Anbindung der Querträger an die Bodenplatte der Aufnahmewanne erreicht wird.

In einer Ausführungsform weist die jeweilige Verstärkungsrippe einen Verstärkungsrippenhauptbereich auf, welcher mit den Verstärkungsrippenverzweigungen verbunden ist, wobei sich die Verstärkungsrippenverzweigungen von dem Verstärkungsrippenhauptbereich in unterschiedliche Richtungen erstrecken.

Dadurch wird der technische Vorteil erreicht, dass durch den Verstärkungsrippenhauptbereich der Verstärkungsrippe eine wirksame Anbindung an die Verstärkungsrippenverzweigungen ermöglicht wird.

In einer Ausführungsform weist die jeweilige Verstärkungsrippe jeweils zwei endseitige Verstärkungsrippenverzweigungen auf, welche sich, insbesondere V-förmig, von der jeweiligen Verstärkungsrippe erstrecken, oder weist die jeweilige Verstärkungsrippe jeweils drei endseitige Verstärkungsrippenverzweigungen auf, welche sich, insbesondere Dreizack-förmig, von der jeweiligen Verstärkungsrippe erstrecken.

Dadurch wird der technische Vorteil erreicht, dass durch die zwei, bzw. drei endseitigen Verstärkungsrippenverzweigungen eine wirksame großflächige Krafteinleitung von dem jeweiligen Crashrahmenprofil in den jeweiligen Querträger erreicht wird.

In einer Ausführungsform weist die Aufnahmewanne eine Mehrzahl von Trennwänden auf, welche auf der dem Wanneninnenraum zugewandten Bodenplattenoberseite der Bodenplatte angeordnet und ausgebildet sind, den Wanneninnenraum in Batterieaufnahmebereiche zur Aufnahme von einzelnen Batteriemodulen zu unterteilen.

Dadurch wird der technische Vorteil erreicht, dass eine wirksame Segmentierung der in dem Wanneninnenraum angeordneten Batteriemodule erreicht wird, was im Kollisionsfall zudem die Batteriemodule voneinander abgrenzt.

In einer Ausführungsform weisen die Querträger und/oder die Crashrahmenprofile Anbindungselemente zur Verbindung mit einem Unterfahrschutz des Fahrzeugs auf.

Dadurch wird der technische Vorteil erreicht, dass der Unterfahrschutz des Fahrzeugs die Querträger und die Aufnahmewanne vor Beschädigungen an der Unterseite schützt.

In einer Ausführungsform weist die Batterieeinhausung eine Mehrzahl von Innenquerträgern auf, welche an einer dem Wanneninnenraum zugewandten Bodenplattenoberseite der Bodenplatte angeordnet sind, und/oder welche oberhalb der Bodenplattenoberseite der Bodenplatte angeordnet und mit der Außenwand der Aufnahmewanne verbunden sind.

Dadurch wird der technische Vorteil erreicht, dass durch die Innenquerträger zusätzlich zu den Querträgern die strukturelle Stabilität der Aufnahmewanne nochmals erhöht werden kann.

Insbesondere sind die Innenquerträger endseitig über Innenträgeranbindungen mit jeweils zwei gegenüberliegenden Seitenwandabschnitten der Außenwand und/oder mit der Bodenplatte verbunden.

In einer Ausführungsform ist die Aufnahmewanne als eine kaltgeformte Aufnahmewanne oder warmgeformte Aufnahmewanne ausgebildet.

Dadurch wird der technische Vorteil erreicht, dass eine Aufnahmewanne mit einer vorteilhaften strukturellen Stabilität bereitgestellt werden kann.

In einer Ausführungsform sind die Querträger und/oder die Innenquerträger aus einem gehärteten Stahl gefertigt, welcher insbesondere als ein warmgeformter und pressgehärteter Stahl mit einer Zugfestigkeit von mehr als 1350 MPa oder als ein hochfester Kaltformstahl mit einer Zugfestigkeit in einem Bereich von mehr als 600 MPa ausgebildet ist.

Dadurch wird der technische Vorteil erreicht, dass durch die gewählten Materialien eine besonders hohe strukturelle Stabilität der Batterieeinhausung erreicht wird.

In einer Ausführungsform weisen die Querträger im jeweiligen Querträgerendbereich jeweils ein Verstärkungspatch auf, welcher ausgebildet ist, die Steifigkeit des Querträgerendbereichs gegenüber dem Querträgermittenbereich zu erhöhen.

Dadurch wird der technische Vorteil erreicht, dass eine wirksame Erhöhung der Steifigkeit des jeweiligen Querträgerendbereichs durch den jeweils einen Verstärkungspatch eine verbesserte Erhöhung der Stabilität des Querträgers ermöglicht.

In einer Ausführungsform weist die Batterieeinhausung ein Deckelelement auf, welches einen umlaufenden weiteren Flansch aufweist, wobei der weitere Flansch des Deckelelements mit dem Flansch der Außenwand der Aufnahmewanne verbunden ist, um das Deckelement mit der Aufnahmewanne zu verbinden.

Dadurch wird der technische Vorteil erreicht, dass durch das Deckelelement ein wirksamer Abschluss des Wanneninnenraums der Aufnahme erreicht wird.

In einer Ausführungsform ist auf einer dem Wanneninnenraum zugewandten Bodenplattenoberseite der Bodenplatte der Aufnahmewanne eine Mehrzahl von Versteifungssicken angeordnet, welche sich längs und/oder quer auf der Bodenplattenoberseite erstrecken.

Dadurch wird der technische Vorteil erreicht, dass durch die Versteifungssicken eine vorteilhafte Stabilisierung der Bodenplatte erreicht wird.

In einer Ausführungsform sind die Querträger und/oder die Innenquerträger jeweils aus einem Tailored-Blank-Bauteil geformt.

Dadurch wird der technische Vorteil erreicht, dass ein Tailored-Blank-Bauteil eine besonders belastungsgerechte, bzw. leichtbaugerechte Ausbildung der Querträger und/oder der Innenquerträger ermöglicht und diese einfach, ohne nachträgliche Fügeprozesse herzustellen sind.

Weitere Ausführungsbeispiele werden Bezug nehmend auf die beiliegenden Figuren erläutert. Es zeigen:
- Fig. 1: eine schematische Darstellung einer Batterieeinhausung gemäß einer ersten Ausführungsform;
- Figs. 2A-C: schematische Darstellungen eines Querträgers der in der Fig. 1 dargestellten Batterieeinhausung gemäß der ersten Ausführungsform in Aufsicht und in Schnittansichten;
- Figs. 3A-B: schematische Darstellungen eines Querträgers der in der Fig. 1 dargestellten Batterieeinhausung gemäß einer zweiten Ausführungsform in Aufsicht und in Schnittansicht;
- Fig. 4: eine schematische Darstellung einer Batterieeinhausung gemäß einer dritten Ausführungsform;
- Figs. 5A-B: schematische Darstellungen eines Querträgers der in der Fig. 4 dargestellten Batterieeinhausung gemäß der dritten Ausführungsform in Aufsicht und in Schnittansicht;
- Fig. 6: eine schematische Darstellung einer Batterieeinhausung gemäß einer vierten Ausführungsform;
- Fig. 7: eine schematische Darstellung einer Batterieeinhausung gemäß einer fünften Ausführungsform; und
- Fig. 8: eine schematische Darstellung einer Batterieeinhausung gemäß einer sechsten Ausführungsform.

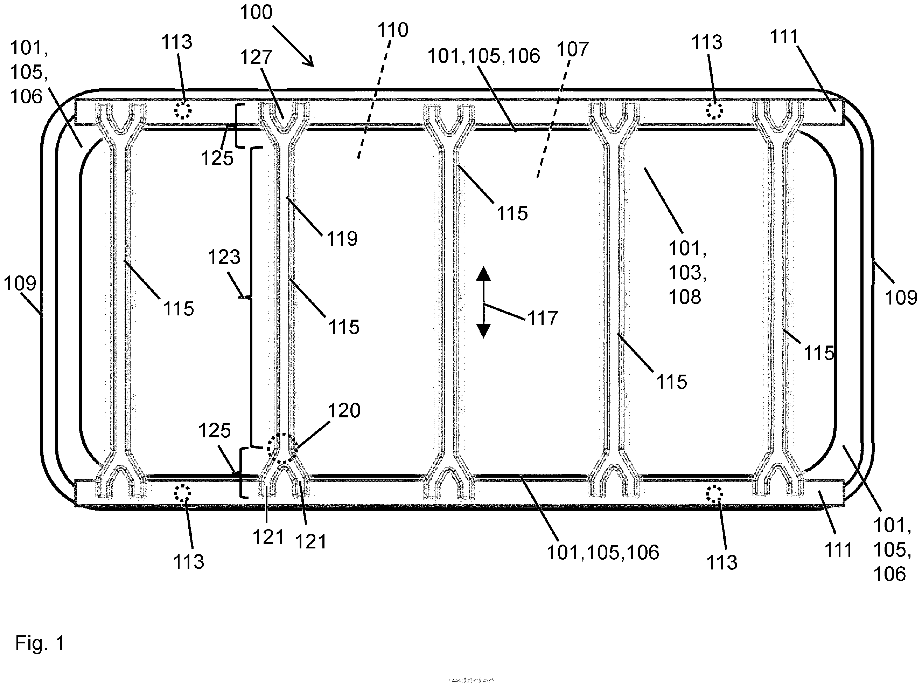

Die Figur 1 zeigt eine schematische Darstellung einer Batterieeinhausung gemäß einer ersten Ausführungsform, insbesondere einer Batterieeinhausung 100 für die Aufnahme einer Mehrzahl von in Fig. 1 nicht dargestellten Batteriezellen oder Batteriemodulen, insbesondere in einem elektrisch antreibbaren Fahrzeug. Die Fig. 1 zeigt eine unterseitige Ansicht der Batterieeinhausung 100.

Die Batterieeinhausung 100 weist hierbei eine in Fig. 1 dargestellte Aufnahmewanne 101 zum Aufnehmen der Mehrzahl von Batteriezellen oder Batteriemodulen auf. Die Aufnahmewanne 101 ist einstückig geformt ausgebildet.

Die Aufnahmewanne 101 weist eine Bodenplatte 103 und eine Außenwand 105 auf, welche die Bodenplatte 103 umlaufend angeordnet ist. Die Außenwand 105 besteht auf vier Seitenwandabschnitten 106, wobei jeweils zwei der vier Seitenwandabschnitte 106 gegenüberliegend angeordnet sind.

Die Außenwand 105 begrenzt einen in Fig. 1 nicht einsehbaren Wanneninnenraum 107 der Aufnahmewanne 101, in welchem die Batteriezellen oder Batteriemodule aufgenommen sind. In der Darstellung der Fig. 1 ist die dem Wanneninnenraum 107 abgewandte Bodenplattenunterseite 108 der Bodenplatte 103 gezeigt.

An der Außenwand 105 der Aufnahmewanne 101 ist ein die Außenwand 105 umlaufender Flansch 109 angeordnet, welcher sich winklig, insbesondere nahezu rechtwinklig, zu der Außenwand 105 der Aufnahmewanne 101 erstreckt, wobei der Flansch 109 insbesondere bei der Formung aus dem Blechmaterial zum Beispiel durch Tiefziehen mit ausgeformt ist.

Die Bodenplatte 103 der Aufnahmewanne 101 nimmt die Mehrzahl von Batteriezellen oder Batteriemodulen auf, wobei in der Fig. 1 die Batteriezellen oder Batteriemodule nicht dargestellt sind. Die Mehrzahl von elektrischen Batteriezellen oder Batteriemodulen kann insbesondere auf die Bodenplatte 103 aufgesetzt werden.

Hierbei weist die Aufnahmewanne 101 insbesondere eine Mehrzahl von in Fig. 1 nicht dargestellten Trennwänden auf, welche auf der dem Wanneninnenraum 107 zugewandten und der Bodenplattenunterseite 108 abgewandten Bodenplattenoberseite 110 der Bodenplatte 103 angeordnet und ausgebildet sind, den Wanneninnenraum 107 in Batterieaufnahmebereiche zur Aufnahme von einzelnen Batteriemodulen zu unterteilen.

Auch wenn dies in der Fig. 1 nicht dargestellt ist, weist die Batterieeinhausung 100, insbesondere im eingebauten Zustand zum Beispiel im Kraftfahrzeug, ein Deckelelement auf, welches mit dem die Außenwand 105 umlaufenden Flansch 109 verbunden ist, um den Wanneninnenraum 107 von einem Außenbereich der Batterieeinhausung 100 abzuschließen. Insbesondere ist hierbei ein weiterer Flansch des Deckelelements mit dem Flansch 109 der Außenwand 105 verbunden, insbesondere stoffschlüssig, formschlüssig und/oder kraftschlüssig verbunden, um eine wirksame Befestigung des Deckelelements an der Außenwand 105 sicherzustellen.

Die Aufnahmewanne 101 besteht insbesondere aus Metallblech oder einem Verbundwerkstoff umfassend Metall.

Wie aus der Fig. 1 hervorgeht, weist die Batterieeinhausung 100 ferner eine Mehrzahl von Crashrahmenprofilen 111, welche an wenigstens zwei Seitenwandabschnitten 106 der Außenwand 105 der Aufnahmewanne 101 angeordnet sind, und welche ausgebildet sind, auf die Aufnahmewanne 101 wirkende Kräfte durch eine Verformung aufzunehmen. In der Fig. 1 sind zwei gegenüberliegende Crashrahmenprofile 111 gezeigt, welche an zwei gegenüberliegenden Seitenwandabschnitten 106 der Außenwand 105 der Aufnahmewanne 101 angeordnet sind. Alternativ ist es jedoch auch möglich, dass die Batterieeinhausung 100 vier Crashrahmenprofile 111 aufweist, von denen jeweils zwei an zwei gegenüberliegenden Seitenwandabschnitten 106 der Außenwand 105 der Aufnahmewanne 101 angeordnet sind, um einen allseitigen Verformungsschutz der Aufnahmewanne 101 sicherzustellen.

Die Crashrahmenprofile 111 dienen vor allem dem Schutz der Aufnahmewanne 101 vor einer Verformung, bzw. einer daraus resultierenden Beschädigung der Batteriezellen, insbesondere bei einem Seitenaufprall des Fahrzeuges.

Auch wenn dies in der Fig. 1 lediglich schematisch dargestellt ist, weisen die Crashrahmenprofile 111 eine Mehrzahl von Koppelabschnitten 113 zur Befestigung der Batterieeinhausung 100 an in Fig. 1 nicht dargestellten Karosserielängsträgern, insbesondere Fahrzeugschweller, auf. Die Koppelabschnitte 113 der Crashrahmenprofile 111 weisen insbesondere mehrere Durchführungen auf, durch welche ein in Fig. 1 nicht gezeigtes Befestigungselement, insbesondere Befestigungsschraube, führbar ist, um die Batterieeinhausung 100 an den Karosserielängsträgern, insbesondere Fahrzeugschwellern, zu befestigen.

Ferner weist die Batterieeinhausung 100 eine Mehrzahl von Querträgern 115 auf, welche jeweils mit zwei Crashrahmenprofilen 111 der Mehrzahl von Crashrahmenprofilen 111 verbunden sind. Die Querträger 115 stabilisieren die Crashrahmenprofile 111 nochmals und verbessern den Widerstand der Aufnahmewanne 101 vor Verformung.

Auch wenn das in der in Fig. 1 gewählten Ansicht nicht gezeigt ist, sind die Querträger 115 zumindest abschnittsweise als jeweilige zumindest einseitig offene Profilkörper ausgebildet, welche mit dem jeweiligen Crashrahmenprofil 111 verbunden sind. Die zumindest abschnittsweise jeweils zumindest einseitig offene Seite der Querträger 115 ist hierbei dem jeweiligen Crashrahmenprofil 111 zugewandt. Die Querträger 115 erstrecken sich entlang einer Querträgererstreckungsachse 117.

Aus der Fig. 1 ist ersichtlich, dass die Querträger 115 an der Bodenplattenunterseite 108 der Bodenplatte 103 der Aufnahmewanne 101 angeordnet sind. Insbesondere sind die Querträger 115 parallel zueinander angeordnet.

Die Querträger 115 weisen jeweils eine sich entlang der jeweiligen Querträgererstreckungsachse 117 erstreckende Verstärkungsrippe 119 auf, wobei die jeweilige Verstärkungsrippe 119 sich im Bereich des zumindest einseitig offenen Profilkörpers in eine Mehrzahl von Verstärkungsrippenverzweigungen 121 aufspreizt.

Die jeweilige Verstärkungsrippe 119 weist hierbei insbesondere einen Verstärkungsrippenhauptbereich 120 auf, welcher mit den Verstärkungsrippenverzweigungen 121 verbunden ist, wobei sich die Verstärkungsrippenverzweigungen 121 von dem Verstärkungsrippenhauptbereich 120 in unterschiedliche Richtungen erstrecken.

Insbesondere weisen die Querträger 115 jeweils einen Querträgermittenabschnitt 123 und jeweils zwei mit dem Querträgermittenabschnitt 123 einstückig ausgebildete Querträgerendabschnitte 125 auf. Hierbei sind die Querträgerendabschnitte 125 insbesondere jeweils als zumindest einseitig offene Profilkörper ausgebildet, welche mit dem jeweiligen Crashrahmenprofil 111 in der Einbaulage von unten verbunden sind, und wobei die Mehrzahl von Verstärkungsrippenverzweigungen 121 der jeweiligen Verstärkungsrippe 119 in dem jeweiligen Querträgerendabschnitt 125 geformt ist. Somit weisen die Querträgerendabschnitte 125 eine größere Breite auf, als der Querträgermittenabschnitt 123 des jeweiligen Querträgers 115. Die Breite bezieht sich dabei auf die Breite der Profilierung, bzw. der Rippe selbst, selbst wenn die Rippe als umlaufende flache Blechabschnitte bzw. unverformte Bereiche ausgebildet sein kann.

Die Einbringung der Verstärkungsrippenverzweigungen 121 in die jeweiligen Querträgerendabschnitte 125 des jeweiligen Querträgers 115 ermöglicht in Kombination mit der Anbindung an das jeweilige Crashrahmenprofil 111 eine vorteilhafte Kraftübertragung bei einem Seitenaufprall auf das Crashrahmenprofil 111, beispielsweise im Rahmen eines "Side Pole Crashes", bei welchem ein Pfahl auf den Bereich zwischen Vorder- und Hintertür des Fahrzeugs mit einer Geschwindigkeit von 32 km/h trifft.

Die hierbei auftretenden Kräfte werden durch die Verstärkungsrippenverzweigungen 121 der jeweiligen Querträgerendabschnitte 125 in den Hauptlastpfad des Querträgermittenabschnitts 123 des jeweiligen Querträgers 115 eingeleitet und wirksam transportiert. Die Verstärkungsrippenverzweigungen 121 befinden sich erfindungsgemäß an der beim Seitenaufprall am meisten biegegefährdeten Stelle etwa zwischen dem Crashrahmenprofil 111 und dem jeweiligen Querträger 115 und erhöhen damit die Biegesteifigkeit und das maximal zulässige Kraftniveau. Die am meisten biegegefährdete Stelle kann sich dabei je nach Art und Ausführung der Fahrzeugkarosserie leicht unterscheiden.

Zudem ermöglicht die Aufweitung der Querträgerendabschnitte 125 des jeweiligen Querträgers 115 aufgrund der geringeren Breite des Querträgermittenabschnitts 123 des jeweiligen Querträgers 115 eine Gewichteinsparung, was insbesondere bei einem elektrisch angetriebenen Fahrzeug vorteilhaft ist.

Insbesondere weisen die Querträgerendabschnitte 125 neben den Verstärkungsrippenverzweigungen 121 unverformte Abschnitte 127 auf, welche jeweils mit dem jeweiligen Crashrahmenprofil 111 verbunden sind. Die unverformten Abschnitte 127 sind aufgrund des schwachen Kontrasts in der Fig. 1 nicht sichtbar, so dass diesbezüglich auf die nachfolgenden Figuren verwiesen wird.

Insbesondere erstreckt sich die entlang der jeweiligen Querträgererstreckungsachse 117 erstreckende Verstärkungsrippe 119 des jeweiligen Querträgers 115 über die gesamte Länge des Querträgermittenabschnitts 123.

Insbesondere ist der jeweilige Querträgerendabschnitt 125 des jeweiligen Querträgers 115 mit dem jeweiligen Crashrahmenprofil 111 stoffschlüssig, formschlüssig und/oder kraftschlüssig verbunden.

Die Hauptfügestelle wird hierbei vergrößert und mehr Anbindungspunkte bzw. Anbindungsfläche zwischen den Querträgern 115 und dem jeweiligen Crashrahmenprofil 111 werden bereitgestellt, welche beispielsweise durch Punktschweißen oder Laserschweißen ausgeführt sind.

Aus der Fig. 1 geht ferner hervor, dass die jeweilige Verstärkungsrippe 119 jeweils zwei endseitige Verstärkungsrippenverzweigungen 121 aufweist, welche sich, insbesondere V-förmig, von der jeweiligen Verstärkungsrippe 119 erstrecken.

Insbesondere sind die Querträger 115, insbesondere der Querträgermittenabschnitt 123 des jeweiligen Querträgers 115, mit der Bodenplattenunterseite 108 der Bodenplatte 103 stoffschlüssig, formschlüssig und/oder kraftschlüssig verbunden, insbesondere durch Punktschweißkleben oder Laserschweißen.

Insbesondere weisen die Querträger 115 und/oder die Crashrahmenprofile 111 in Fig. 1 nicht dargestellte Anbindungselemente zur vorzugsweise lösbaren Verbindung mit einem in Fig. 1 nicht dargestellten Unterfahrschutz des Fahrzeugs auf.

Insbesondere weist die Batterieeinhausung 100 eine Mehrzahl von in Fig. 1 nicht dargestellten Innenquerträgern auf, welche an einer dem Wanneninnenraum 107 zugewandten Bodenplattenoberseite 110 der Bodenplatte 103 angeordnet sind, und/oder welche oberhalb der Bodenplattenoberseite 110 der Bodenplatte 103 angeordnet und mit der Außenwand 105 der Aufnahmewanne 101 verbunden sind.

Insbesondere sind die Querträger 115 und/oder die Innenquerträger aus einem gehärteten Stahl gefertigt, welcher insbesondere als ein warmgeformter und pressgehärteter Stahl mit einer Zugfestigkeit von mehr als 1350 MPa oder als ein hochfester Kaltformstahl mit einer Zugfestigkeit in einem Bereich von mehr als 600 MPa ausgebildet ist.

Auch können die Querträger 115 und/oder die Innenquerträger jeweils aus einem Tailored-Blank-Bauteil geformt sein, um Leichtbauanforderungen noch besser Rechnung zu tragen.

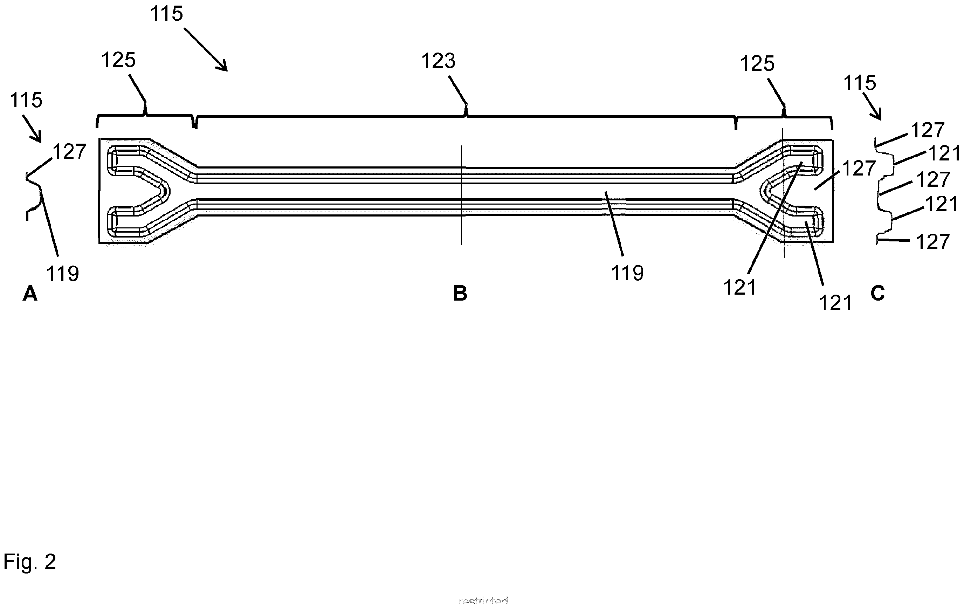

Die Figuren 2A bis 2C zeigen schematische Darstellungen eines Querträgers der in der Fig. 1 dargestellten Batterieeinhausung gemäß der ersten Ausführungsform in Aussicht und in Schnittansichten.

In der Fig. 2B ist eine vergrößerte Aufsicht des in Bezug auf die Fig. 1 schon im Detail beschriebenen Querträgers 115 gezeigt, welcher den Querträgermittenschnitt 123 insbesondere zur Befestigung an der Bodenplatte 103 der Aufnahmewanne 101 und endseitig sich daran erstreckende Querträgerendabschnitte 125 zur Befestigung an den Crashrahmenprofilen 111 aufweist. Hierbei weist der Querträger 115, insbesondere die Querträgerendabschnitte 125 die Mehrzahl von Verstärkungsrippenverzweigungen 121 auf, welche eine wirksame Krafteinleitung ermöglichen.

Die Figur 2A zeigt ferner einen Querschnitt durch den Querträgermittenabschnitt 123 und die Figur 2C zeigt ferner einen Querschnitt durch den Querträgerendabschnitt 125, so dass gemäß den Figuren 2A und 2C die Ausbildung des Querträgers 115 als einseitig offener Profilkörper mit einer offenen Profilkörperunterseite deutlich hervorgeht.

Aus der in Fig. 2B gewählten Darstellung ist ersichtlich, dass sich neben den Verstärkungsrippenverzweigungen 121 im jeweiligen Querträgerendabschnitt 125 unverformte Abschnitte 127 befinden, in welchen keine Profilierung eingebracht wurde, sondern sich das Blech in der Einbausituation horizontal erstreckt. In den unverformten Abschnitten 127 erfolgt vorzugsweise eine Verschweißung wie Punktschweißen zum Crashrahmenprofil 111.

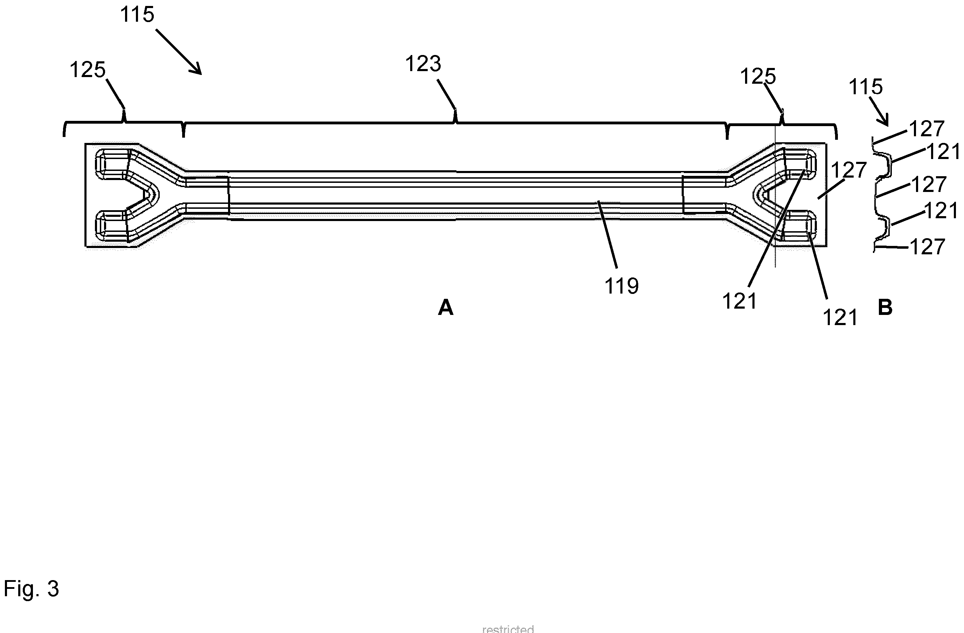

Die Figuren 3A bis 3B zeigen schematische Darstellungen eines Querträgers der in der Fig. 1 dargestellten Batterieeinhausung gemäß einer zweiten Ausführungsform in Aufsicht und in Schnittansicht. Es wird auf die Ausführungen zu den Figuren 2A bis 2C verwiesen.

Hierbei zeigt die Figur 3A den Querträger 115 gemäß der zweiten Ausführungsform in Aufsicht und zeigt die Figur 3B den Querträgerendabschnitt 125 des Querträgers 115 in einer Schnittansicht gemäß der zweiten Ausführungsform.

Der in den Figuren 3A und 3B gezeigte Querträger 115 gemäß der zweiten Ausführungsform unterscheidet sich von dem in den Figuren 2A, 2B und 2C gezeigten Querträger 115 gemäß der ersten Ausführungsform dadurch, dass in dem Querträgerendabschnitt 125 eine doppellagige Ausbildung der Profilierung vorliegt, wobei insbesondere unterschiedliche Wanddicken im Bereich der Verstärkungsrippenverzweigungen 121 und im Bereich der unverformten Abschnitte 127 vorliegen. Diese Ausführungsform ist insbesondere durch Einsatz von Verstärkungspatches möglich, wobei die Patches vor der Umformung aufgebracht, fixiert und gemeinsam zum Profilkörper, bzw. Querträger umgeformt sind.

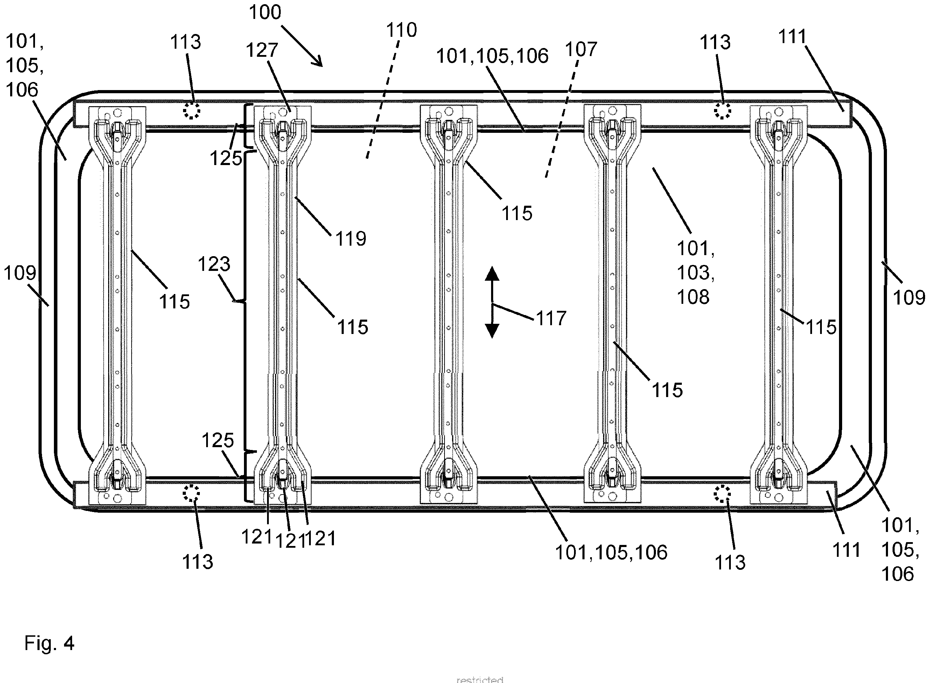

Fig. 4 zeigt eine schematische Darstellung einer Batterieeinhausung gemäß einer dritten Ausführungsform.

Die in der Fig. 4 gezeigte Batterieeinhausung 100 gemäß der dritten Ausführungsform unterscheidet sich von der in der Fig. 1 gezeigten Batterieeinhausung 100 gemäß der ersten Ausführungsform lediglich in der Form der Querträger 115.

In der in Fig. 4 gezeigten dritten Ausführungsform weisen die Querträgerendabschnitte 125 der Querträger 115 jeweils drei endseitige Verstärkungsrippenverzweigungen 121 auf, welche sich, insbesondere Dreizack-förmig, von der jeweiligen Verstärkungsrippe 119 erstrecken.

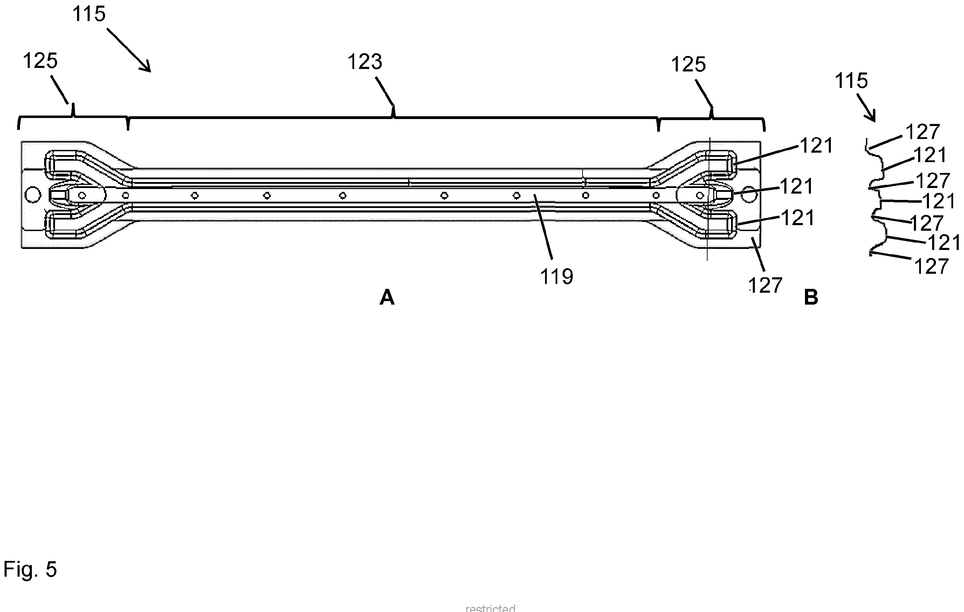

Die Figuren 5A bis 5B zeigen schematische Darstellungen eines Querträgers der in der Fig. 4 dargestellten Batterieeinhausung gemäß der dritten Ausführungsform in Aufsicht und in Schnittansicht.

Es geht aus der Fig. 5A die Aufsicht auf den Querträger 115 hervor, umfassend die drei endseitigen Verstärkungsrippenverzweigungen 121 im Querträgerendabschnitt 125.

Es geht aus der Fig. 5B geht eine Schnittansicht des Querträgerendabschnitts 125 des Querträgers 115 hervor, umfassend die drei endseitigen Verstärkungsrippenverzweigungen 121, sowie die dazwischen angeordneten unverformten Abschnitte 127.

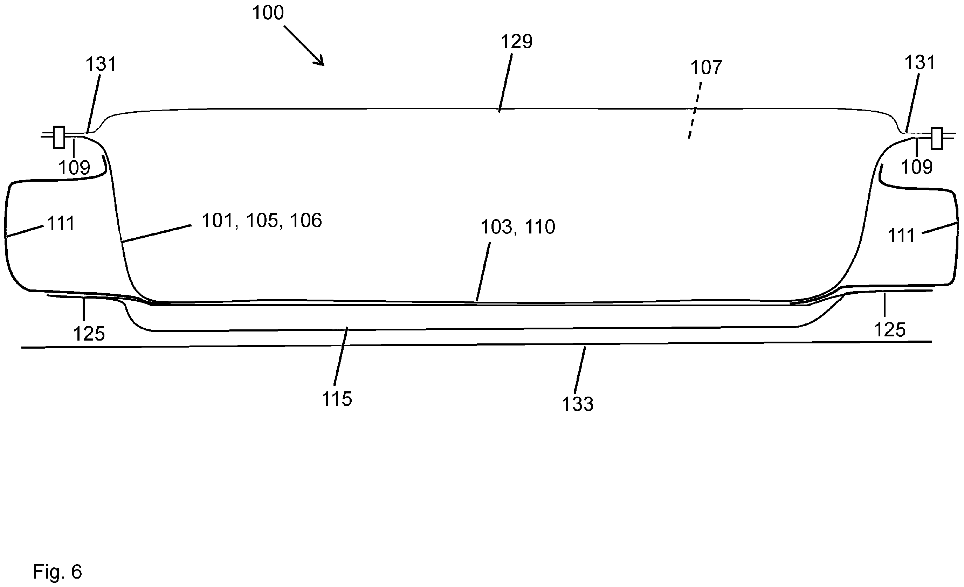

Fig. 6 zeigt eine schematische Darstellung einer Batterieeinhausung gemäß einer vierten Ausführungsform.

Im Gegensatz zu den vorangegangenen Ausführungsformen ist in der Fig. 6 eine Schnittansicht durch die lediglich schematisch dargestellte Batterieeinhausung 100 gezeigt.

Die Batterieeinhausung 100 weist die Aufnahmewanne 101 mit der Bodenplatte 103 und die die Bodenplatte 103 umlaufende Außenwand 105 mit entsprechenden Seitenwandabschnitten 106 auf, wobei an der Außenwand 105 ein umlaufender Flansch 109 angeordnet ist, welcher mit einem weiteren Flansch 131 eines Deckelelements 129 der Aufnahmewanne 101 verbunden ist, um den Wanneninnenraum 107 und die darin aufgenommenen Batteriemodule, bzw. Batteriezellen wirksam abzuschließen.

An der Außenwand 105 sind die in Fig. 6 lediglich schematisch dargestellte Crashrahmenabschnitte 111 angeordnet, welche hierbei an die Außenwand 105 und der Bodenplatte 103 gefügt sind. Hierbei sind die Crashrahmenprofile 111 insbesondere jeweils einschalig ausgebildet. Hier können die Crashrahmenabschnitte 111 jeweils eine sich entlang des jeweiligen Seitenwandabschnitts 106 der Außenwand 105 erstreckende zumindest eine Hohlkammer aufweisen.

Unterhalb der Bodenplatte 103 sind die Querträger 115 angeordnet, welche mit ihren jeweiligen Querträgerendabschnitten 125 mit jeweils gegenüberliegenden Crashrahmenabschnitten 111 verbunden sind. Die Verstärkungsrippe 119 und die Verstärkungsrippenverzweigungen 121 der Querträger 115 sind in der Fig. 6 nicht gezeigt.

Ferner weisen die Querträger 115 und/oder die Crashrahmenprofile 111 in Fig. 6 nicht dargestellte Anbindungselemente zur Verbindung mit einem in Fig. 6 dargestellten Unterfahrschutz 133 des Fahrzeugs auf.

Für weitere Details in Bezug auf die Batterieeinhausung 100 wird auf die Ausführungen zu den vorangegangenen Ausführungsformen verwiesen.

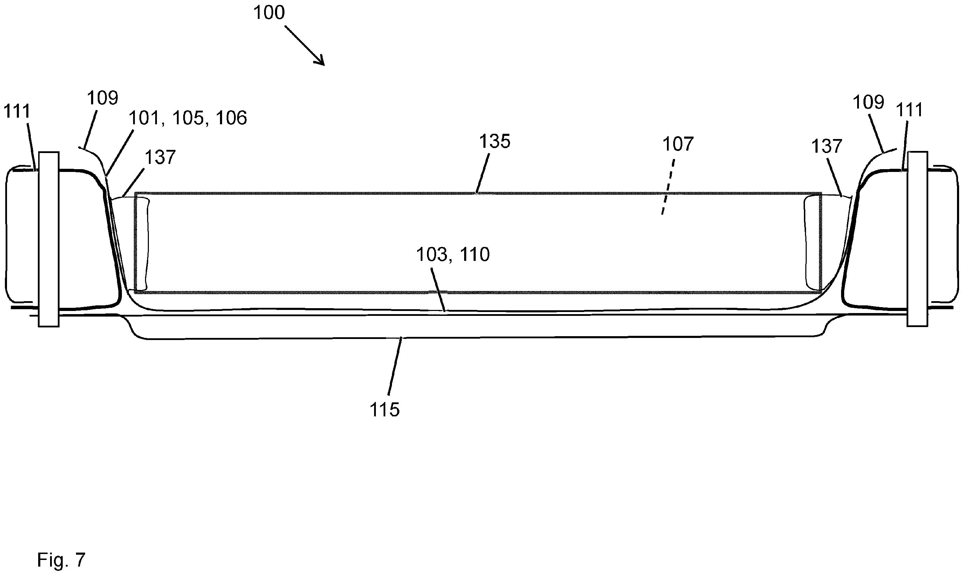

Fig. 7 zeigt eine schematische Darstellung einer Batterieeinhausung gemäß einer fünften Ausführungsform.

Die in der Fig. 7 dargestellte Batterieeinhausung 100 gemäß der fünften Ausführungsform unterscheidet sich von der in der Fig. 6 dargestellte Batterieeinhausung 100 gemäß der vierten Ausführungsform, bis auf den in der Fig. 7 nicht dargestellten Unterfahrschutz 133, dadurch, dass kein Deckelelement 129 vorhanden sind, sondern die Flansche 109 der Aufnahmewanne 101 mit einem in Fig. 7 nicht gezeigten Unterboden der Fahrzeugkarosserie verbunden sind, dass die Crashrahmenprofile 111 jeweils zweischalig ausgebildet sind, dass die Crashrahmenprofile 111 an den jeweiligen Seitenwandabschnitt 106 der Außenwand 105 gefügt sind, und dass in dem Wanneninnenraum 107 der Aufnahmewanne 101 Innenquerträger 135 angeordnet sind, welche endseitig über Innenquerträgeranbindungen 137 mit jeweils zwei gegenüberliegenden Seitenwandabschnitten 106 der Außenwand 105 verbunden sind.

Auch wenn dies in der Fig. 7 nicht dargestellt ist, können die jeweils zweischalig ausgebildeten Crashrahmenprofile 111 auch mit einer oberen und einer unteren Hohlkammer ausgebildet sein, welche sich jeweils entlang der Seitenwandabschnitte 106 der Außenwand 105 erstrecken und an den jeweiligen Seitenwandabschnitt 106 der Außenwand 105 und/oder die Bodenplatte 103 gefügt sein.

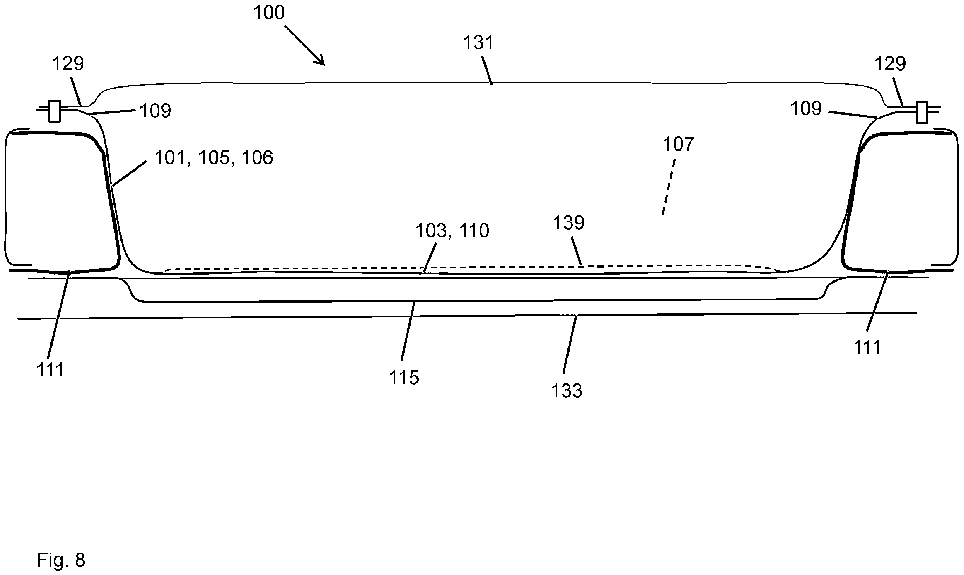

Fig. 8 zeigt eine schematische Darstellung einer Batterieeinhausung gemäß einer sechsten Ausführungsform.

Die in der Fig. 8 dargestellte Batterieeinhausung 100 gemäß der sechsten Ausführungsform unterscheidet sich von der in der Fig. 6 dargestellte Batterieeinhausung 100 gemäß der vierten Ausführungsform, dadurch, dass analog zur fünften Ausführungsform der Fig. 7 die Crashrahmenprofile 111 jeweils zweischalig ausgebildet sind und an den jeweiligen Seitenwandabschnitt 106 der Außenwand 105 gefügt sind, und dass auf der dem Wanneninnenraum 107 zugewandten Bodenplattenoberseite 110 der Bodenplatte 103 der Aufnahmewanne 101 eine Mehrzahl von lediglich schematisch dargestellten Versteifungssicken 139 angeordnet sind, welche sich längs und/oder quer auf der Bodenplattenoberseite 110 erstrecken.

### Bezugszeichenliste

- 100: Batterieeinhausung
- 101: Aufnahmewanne
- 103: Bodenplatte
- 105: Außenwand
- 106: Seitenwandabschnitt
- 107: Wanneninnenraum
- 108: Bodenplattenunterseite
- 109: Flansch
- 110: Bodenplattenoberseite
- 111: Crashrahmenprofil
- 113: Koppelabschnitt
- 115: Querträger
- 117: Querträgererstreckungsachse
- 119: Verstärkungsrippe
- 120: Verstärkungsrippenhauptbereich
- 121: Verstärkungsrippenverzweigung
- 123: Querträgermittenabschnitt
- 125: Querträgerendabschnitt
- 127: Unverformter Abschnitt des Querträgers
- 129: Deckelelement
- 131: Weiterer Flansch des Deckelelements
- 133: Unterfahrschutz
- 135: Innenquerträger
- 137: Innenquerträgeranbindungen
- 139: Versteifungssicken

## Patentansprüche

1. Batterieeinhausung (100) für die Aufnahme einer Mehrzahl von Batteriezellen oder Batteriemodulen, insbesondere in einem elektrisch antreibbaren Fahrzeug, mit:
einer einstückigen und geformten Aufnahmewanne (101) zum Aufnehmen der Mehrzahl der Batteriezellen oder Batteriemodule, wobei die Aufnahmewanne (101) eine Bodenplatte (103) und eine Außenwand (105) aufweist, welche die Bodenplatte (103) umlaufend angeordnet ist, wobei die Außenwand (105) einen Wanneninnenraum (107) der Aufnahmewanne (101) begrenzt,
wobei an der Außenwand (105) der Aufnahmewanne (101) ein die Außenwand (105) umlaufender Flansch (109) angeordnet ist, welcher sich winklig zu der Außenwand (105) der Aufnahmewanne (101) erstreckt;
einer Mehrzahl von Crashrahmenprofilen (111), welche an wenigstens zwei Seitenwandabschnitten (106) der Außenwand (105) der Aufnahmewanne (101) angeordnet sind, und welche ausgebildet sind, auf die Aufnahmewanne (101) wirkende Kräfte durch eine Verformung aufzunehmen,
wobei die Crashrahmenprofile (111) eine Mehrzahl von Koppelabschnitten (113) zur Befestigung der Batterieeinhausung (100) an Karosserielängsträgern, insbesondere Fahrzeugschwellern aufweisen; und
einer Mehrzahl von Querträgern (115), welche jeweils mit zwei Crashrahmenprofilen (111) der Mehrzahl von Crashrahmenprofilen (111) verbunden sind,
wobei die Querträger (115) zumindest abschnittsweise als Profilkörper ausgebildet sind, welche mit dem jeweiligen Crashrahmenprofil (111) verbunden sind, und
wobei die Querträger (115) in den Querträgerendbereichen (125) eine gegenüber dem Querträgermittenbereich (123) größere Zugfestigkeit oder Steifigkeit aufweisen.

2. Batterieeinhausung (100) nach Anspruch 1, **dadurch gekennzeichnet, dass** die Steifigkeit des jeweiligen Querträgerendbereichs (125) erhöht ist, durch jeweils eine sich entlang der jeweiligen Querträgererstreckungsachse (117) erstreckende Verstärkungsrippe (119), wobei die jeweilige Verstärkungsrippe (119) sich im jeweiligen Querträgerendbereich (125) in eine Mehrzahl von Verstärkungsrippenverzweigungen (121) aufspreizt.

3. Batterieeinhausung (100) nach Anspruch 1 oder 2, **dadurch gekennzeichnet, dass** die Koppelabschnitte (113) der Crashrahmenprofile (111) jeweils zumindest eine Durchführung aufweisen, durch welche ein Befestigungselement, insbesondere Befestigungsschraube, führbar ist, um die Batterieeinhausung (100) an den Karosserielängsträgern, insbesondere Fahrzeugschwellern zu befestigen.

4. Batterieeinhausung (100) nach einem der vorangehenden Ansprüche, **dadurch gekennzeichnet, dass** die Mehrzahl von Querträgern (115) an einer dem Wanneninnenraum (107) abgewandten Bodenplattenunterseite (108) der Bodenplatte (103) angeordnet ist.

5. Batterieeinhausung (100) nach einem der vorangehenden Ansprüche, **dadurch gekennzeichnet, dass** das jeweilige Crashrahmenprofil (111) mit dem jeweiligen Seitenwandabschnitt (106) der Außenwand (105) jeweils zumindest eine sich entlang des jeweiligen Seitenwandabschnitts (106) erstreckende Hohlkammer begrenzt, oder wobei das jeweilige Crashrahmenprofil (111) ein Hohlkammerprofil ist.

6. Batterieeinhausung (100) nach einem der Ansprüche 2 bis 5, **dadurch gekennzeichnet, dass** die Querträger (115) jeweils den Querträgermittenabschnitt (123) und jeweils zwei mit dem Querträgermittenabschnitt (123) einstückig ausgebildete Querträgerendabschnitte (125) aufweisen, wobei die Querträgerendabschnitte (125) jeweils als Profilkörper ausgebildet sind, welche mit dem jeweiligen Crashrahmenprofil (111) verbunden sind, und wobei die Mehrzahl von Verstärkungsrippenverzweigungen (121) der jeweiligen Verstärkungsrippe (119) in dem jeweiligen Querträgerendabschnitt (125) geformt ist.

7. Batterieeinhausung (100) nach einem der Ansprüche 2 bis 6, **dadurch gekennzeichnet, dass** die Querträgerendabschnitte (125) neben den Verstärkungsrippenverzweigungen (121) unverformte Abschnitte (127) aufweisen, welche jeweils mit dem jeweiligen Crashrahmenprofil (111) verbunden sind.

8. Batterieeinhausung (100) nach einem der Ansprüche 2 bis 7, **dadurch gekennzeichnet, dass** sich die entlang der jeweiligen Querträgererstreckungsachse (117) erstreckende Verstärkungsrippe (119) des jeweiligen Querträgers (115) über die gesamte Länge des Querträgermittenabschnitts (123) erstreckt.

9. Batterieeinhausung (100) nach einem der vorangehenden Ansprüche, **dadurch gekennzeichnet, dass** der jeweilige Querträgerendabschnitt (125) des jeweiligen Querträgers (115) mit dem jeweiligen Crashrahmenprofil (111) stoffschlüssig, formschlüssig und/oder kraftschlüssig verbunden ist.

10. Batterieeinhausung (100) nach einem der vorangehenden Ansprüche, **dadurch gekennzeichnet, dass** die Querträger (115) mit der Bodenplattenunterseite (108) der Bodenplatte (103) stoffschlüssig, formschlüssig und/oder kraftschlüssig verbunden sind, wobei insbesondere der Querträgermittenabschnitt (123) des jeweiligen Querträgers (115) mit der Bodenplattenunterseite (108) der Bodenplatte (103) stoffschlüssig, formschlüssig und/oder kraftschlüssig verbunden ist, insbesondere durch Punktschweißkleben oder Laserschweißen.

11. Batterieeinhausung (100) nach einem der Ansprüche 2 bis 10, **dadurch gekennzeichnet, dass** die jeweilige Verstärkungsrippe (119) jeweils zwei endseitige Verstärkungsrippenverzweigungen (121) aufweist, welche sich, insbesondere V-förmig, von der jeweiligen Verstärkungsrippe (11) erstrecken, oder wobei die jeweilige Verstärkungsrippe (119) jeweils drei endseitige Verstärkungsrippenverzweigungen (121) aufweist, welche sich, insbesondere Dreizack-förmig, von der jeweiligen Verstärkungsrippe (119) erstrecken.

12. Batterieeinhausung (100) nach einem der vorangehenden Ansprüche, **dadurch gekennzeichnet, dass** die Querträger (115) und/oder die Crashrahmenprofile (111) Anbindungselemente zur Verbindung mit einem Unterfahrschutz (133) des Fahrzeugs aufweisen.

13. Batterieeinhausung (100) nach einem der vorangehenden Ansprüche, **dadurch gekennzeichnet, dass** die Batterieeinhausung (100) eine Mehrzahl von Innenquerträgern (135) aufweist, welche an einer dem Wanneninnenraum (107) zugewandten Bodenplattenoberseite (110) der Bodenplatte (103) angeordnet sind, und/oder welche oberhalb der Bodenplattenoberseite (110) der Bodenplatte (103) angeordnet und mit der Außenwand (105) der Aufnahmewanne (101) verbunden sind.

14. Batterieeinhausung (100) nach einem der vorangehenden Ansprüche, **dadurch gekennzeichnet, dass** die Querträger (115) und/oder die Innenquerträger (135) aus einem gehärteten Stahl gefertigt sind, welcher insbesondere als ein warmgeformter und pressgehärteter Stahl mit einer Zugfestigkeit von mehr als 1350 MPa oder als ein hochfester Kaltformstahl mit einer Zugfestigkeit in einem Bereich von mehr als 600 MPa ausgebildet ist.

15. Batterieeinhausung (100) nach einem der vorangehenden Ansprüche, **dadurch gekennzeichnet, dass** die Querträger (115) im jeweiligen Querträgerendbereich (125) jeweils ein Verstärkungspatch aufweisen, welcher ausgebildet ist, die Steifigkeit des Querträgerendbereichs (125) gegenüber dem Querträgermittenbereich (123) zu erhöhen.
